# FASCICULE DE BREVET EUROPEEN

(11) **EP 2 083 980 B1**
(45) Date de publication et mention de la délivrance du brevet: **14.09.2011**
(21) Numéro de dépôt: 06830991.3
(22) Date de dépôt: 23.10.2006
(51) Int. Cl.: B29C 33/30

(54) **OUTIL COMPOSITE POUR LE MOULAGE DE PIÈCES CYLINDRIQUES**
VERBUNDWERKZEUG ZUM FORMEN ZYLINDRISCHER TEILE
COMPOSITE TOOL FOR MOULDING CYLINDRICAL PARTS

(43) Date de publication de la demande: 05.08.2009
(73) Titulaire: Constructions Industrielles de la Méditerranée - CNIM, 75008 Paris (FR)
(72) Inventeur: MICHEAUX, Dominique, 83110 Sanary sur Mer (FR); VALIBOUSE, Pierre, 83200 Le Revest les Eaux (FR); MARINO, Philippe, 83190 Ollioules (FR); COLOMBO, Denis, 83110 Sanary sur Mer (FR)
(74) Mandataire: Thinat, Michel
(86) Numéro de dépôt international: PCT/FR2006/002375
(87) Numéro de publication internationale: WO 2008/049975

(56) Documents cités:
- EP-A- 0 394 934
- US-B1- 6 168 358

## Description

La présente invention concerne un outil en matériau composite pour la réalisation d'une pièce cylindrique en un matériau composite. L'invention concerne également un procédé de réalisation d'un tel outil.

Dans le domaine aéronautique, pour ne citer qu'un seul domaine d'application, on utilise de plus en plus de pièces composites en fibre de carbone pour obtenir des structures de plus en plus légères sans pour autant renoncer à la rigidité et à d'autres caractéristiques nécessaires, mais aussi pour obtenir des éléments présentant un aspect plus agréable qu'une pièce en métal tout en assurant une résistance au feu.

La réalisation de telles pièces composites nécessite un outillage de grande précision. Cet outillage, que l'on peut également appeler un moule, doit à la fois assurer les fonctions habituelles de tout outillage rappelées ci-après, garantir des tolérances géométriques de la pièce finale et supporter des cycles thermiques et de pressions parfois assez particuliers tels que ceux qui interviennent, par exemple, lors d'un passage en autoclave.

Habituellement, on utilise à cet effet des moules métalliques réalisés en acier Invar par chaudronnerie et usinage ou des moules composites réalisés en fibres de carbone, préimprégnées de résine époxy, par moulage dans un moule appelé « master ».

Bien que la technologie Invar soit largement utilisée en fabrication en série, il n'en reste pas moins que le coût unitaire d'un tel moule est élevé. En contrepartie, les outillages réalisés en fibres de carbone sont moins chers, mais sont plus fragiles et pratiquement non réparables, et cela principalement en raison des problèmes de non étanchéité qui subsistent après leur réparation.

Lorsqu'il s'agit de réaliser des pièces cylindriques, notamment de grandes dimensions, les problèmes de réalisation proviennent moins de la taille et des difficultés de manipulation de tels moules, mais plutôt de la difficulté de garantir les tolérances géométriques finales de la pièce, car celles-ci dépendent du comportement du moule pendant le cycle de polymérisation et aussi très fortement de la structure de la pièce à obtenir et de son comportement sur son outillage. En effet, les problèmes résultant de la dilatation thermique et d'un retrait de la résine ne sont souvent pas négligeables.

Dans une telle situation, seule une approche par usinage permettrait de garantir les tolérances finales de la pièce.

Il existe des matériaux composites qui, moulés et polymérisés sous température élevée et forte pression en autoclave, peuvent être ensuite usinés pour obtenir la géométrie souhaitée, tout en conservant l'étanchéité requise pour la fabrication de la pièce finale. Cependant, de tels matériaux nécessitent la réalisation d'un « master » capable de tenir aux conditions de température et de pression de leur polymérisation en autoclave. De tels « masters » sont d'autant plus coûteux et complexes que la structure à réaliser est de grandes dimensions et que les exigences géométriques sont sévères. A titre d'exemple, des tolérances de +/- 0,6 mm pour un diamètre de la pièce de 4 m ne sont pas des conditions rares à remplir. De plus, la segmentation d'un outillage en plusieurs pétales pour permettre le démoulage tel que décrit par example dans le document EP 0394 934 A1, rend cette utilisation Encore plus problématique.

Comme indiqué au début de cette description, la réalisation d'une pièce composite en fibres de carbone préimprégnées de résine époxy nécessite un outillage de grande précision, qui doit assurer les fonctions habituelles de tout outillage de précision. Dans le domaine intéressant ici, l'outillage doit permettre de draper une peau raidie de profils type Ω par dépose de fibres. L'outillage doit également pouvoir être extrait de la structure drapée après polymérisation. En outre, l'outillage doit respecter les tolérances demandées et doit permettre la tenue de raidisseurs et de leurs noyaux. Enfin, la surface de dépose des fibres doit être étanche à température ambiante et à température élevée en autoclave afin de pouvoir placer un sac à vide lors de la polymérisation. L'outillage doit également permettre de fixer des cales ou contre-moules (caul plates) pour la phase de polymérisation. Et enfin, l'outillage doit résister aux conditions d'environnement du procédé de fabrication de la pièce.

Par ailleurs, un outillage composite destiné à la réalisation d'une pièce cylindrique en un matériau composite doit comporter des thermocouples, doit avoir une surface de contact avec une rugosité maximale de Ra=0,8 et doit intégrer des surlongueurs nécessaires au détourage de la pièce obtenue.

Le but de l'invention est de proposer un outillage qui remplit des diverses conditions énoncées ci avant et qui soit facile à manipuler, notamment lors de l'extraction de l'outillage de la structure drapée après polymérisation.

Le but de l'invention est atteint avec un outil en matériau composite pour la réalisation d'une pièce cylindrique en un matériau composite, l'outil étant destiné à constituer un mandrin sur lequel la pièce cylindrique sera formée.

Selon l'invention, l'outil comprend un ensemble d'éléments dont chacun constitue un secteur cylindrique de l'outil, chacun de éléments comportant une structure porteuse en composite de fibres et une peau moulée sur la structure porteuse, l'outil comportant en outre des moyens d'étanchéité destinés à être placés aux jonctions entre les éléments de l'outil.

L'outillage de l'invention est ainsi constitué d'un l'ensemble d'éléments assemblés mécaniquement et qui est démontable élément par élément, selon une séquence précise, ce qui permet le démoulage de la pièce finie. Chacun des éléments d'un tel outil, qui sont également appelés « tuiles », est avantageusement réalisé de la manière suivante :
- on réalise une structure porteuse en composite de fibres de carbone classique. Ceci peut être réalisé suivant un procédé classique consistant en
   - l'utilisation d'un « master » classique en mousse et pâte extrudable et usinage ; un tel master est peu onéreux car il n'a pas besoin d'être très précis ;
   - la cuisson de la structure porteuse en étuve sous vide (donc pas en autoclave) en basse température, de l'ordre de 40°C/45°C, puis un cycle de post-cuisson conférant une tenue en température élevée ;
   - la structure porteuse peut être auto-raidie de façon à supporter les efforts mécaniques lors de la mise en oeuvre de l'outillage ; parmi ces efforts mécaniques notons plus particulièrement ceux intervenant par le drapage, lors de la polymérisation en autoclave, lors d'opérations de manutention, et lors du démontage et du remontage de l'outil ;
- une peau en fibres de carbone préimprégnées d'une résine en époxy ou une peau en fibres de carbone préimprégnées d'une résine polyimide, notamment de bismaléimide, de faible épaisseur sera moulée sur la structure porteuse, cuit à l'autoclave sous vide et pression et à haute température pour obtenir les propriétés mécaniques requises et l'homogénéité attendues de matériaux. La structure porteuse permet cette mise en oeuvre.
- une reprise en usinage de la peau ainsi réalisée permet d'obtenir la géométrie souhaitée ainsi que l'intégration des éléments permettant l'obtention de l'étanchéité aux interfaces.

Un outillage réalisé de la manière décrite ci avant et démontable, tuile par tuile, selon une séquence précise, permet le démoulage de la pièce finie quelque soit les dimensions de celle-ci.

Notons plus particulièrement que le nombre d'éléments qui composent l'outillage de l'invention dépend entièrement des dimensions de la pièce à réaliser et de certaines contraintes de manipulation de chacun des éléments. L'exemple de réalisation décrit plus loin présente un outillage composé de sept tuiles, nombre arbitrairement choisi qui n'est donc en aucun cas limitatif ni préférentiel.

La solution de l'invention est parfaitement adaptable à des outillages de développement, mais peut également être appliquée pour des outillages de production en série. En effet, le matériau utilisé pour la réalisation de la peau permet des reprises et réparations qui peuvent être rendues nécessaires au cours de la vie de l'outillage, par exemple à la suite de chocs ou de tout autre type d'endommagement ou par l'usure.

Selon le mode de réalisation choisi de l'outillage de l'invention, ce dernier peut avoir les caractéristiques supplémentaires ci-après, considérées isolément ou selon toutes les combinaisons techniquement possibles :
- chacun des éléments comporte une structure porteuse en composite de fibres de carbone ;
- chacun des éléments comporte une peau en carbone préimprégnée d'une résine époxy ;
- chacun des éléments comporte une peau en carbone préimprégnée d'une résine à structure polyimide ;
- chacun des éléments comporte une peau en carbone préimprégnée de bismaléimide ;
- chacun des éléments comporte une peau ayant subi, après moulage et cuisson, un usinage conférant à

l'élément des dimensions prédéterminées et à la peau un état de surface prédéterminé ;
- les moyens d'étanchéité comportent des joints toriques gonflables en silicone ;
- l'outil comprend des inserts étanches destinés à être placés aux jonctions des éléments du côté de la peau.

Le but de l'invention est également atteint avec un procédé de réalisation d'un outil en matériau composite pour la réalisation d'une pièce cylindrique en un matériau composite, l'outil comprenant un ensemble d'éléments dont chacun constitue un secteur cylindrique de l'outil.

Selon l'invention, le procédé comprend au moins les étapes suivantes :
- réalisation d'un nombre prédéterminé d'éléments comportant une structure porteuse en composite de fibres,
- moulage d'une peau sur la structure porteuse,
- cuisson des éléments,
- usinage de la peau de chacun des éléments afin de conférer à chacun des éléments des dimensions prédéterminées et à la peau un état de surface prédéterminé.

Les secteurs de peau de l'outillage sont composés d'un composite à base de nappes de fibres de carbone, préimprégnées d'une résine et déposées suivant un plan de drapage quasi-iso.

Lorsque l'on réalise la préimprégnation avec une résine outillage, la peau ne permet pas l'obtention directe par moulage de la tolérance géométrique exigée et n'autorise pas non plus une reprise par usinage pour garantir un état de surface satisfaisant vis-à-vis de la rugosité de surface et de l'étanchéité exigées. Pour cette raison, la peau est recouverte d'une couche en composite (quasi-iso) de type HexTool ^{®} de la société Hexcel, matériau composite qui présente d'excellentes caractéristiques en ce qui concerne la rugosité de surface et l'étanchéité.

Avantageusement, la peau est réalisée avec une surépaisseur avec 1 à 2 mm afin de permettre un réusinage de la côte finie après fabrication et contrôle d'une première pièce. L'épaisseur recommandée de la peau est de l'ordre de 10 mm.

Dans les dessins annexés, une séquence de figures représente la cinématique de retrait des différents éléments ou tuiles d'un outillage de l'invention d'une pièce réalisée à l'aide de cet outil. On y voit plus particulièrement que la conception de cette invention permet de dégager et d'extraire les éléments uns à uns. A aucun moment de la séquence, la surface des peaux de différents éléments ne coupe la surface de la pièce réalisée. Les moyens à mettre en oeuvre pour effectuer cette opération de démandrinage doivent bien sûr être adaptés à l'utilisation de l'outillage et aux cadences de production requises. ,

La performance de l'étanchéité de l'outillage étant essentielle vis-à-vis de la qualité de la pièce à réaliser, cette étanchéité est adaptée au concept de secteurs cylindriques retenus pour assurer le démandrinage, ainsi qu'au procédé de réalisation de la pièce.

La solution proposée dans le cadre de la présente invention consiste à utiliser deux joints toriques disposés à une distance de la peau de chacun des éléments et à des niveaux différents. La solution de double joint torique permet de contrôler en continu la validité de la barrière d'étanchéité. De plus, cette solution permet de corriger des variations de vide au cours du procédé de réalisation de la pièce composite.

En outre, il est possible d'utiliser des joints toriques pleins en viton ou en silicone, puisque ceux-ci sont prévus à fonctionner à des températures élevées telles que celles prévues en autoclave. Toutefois, en raison des jeux envisagés, il est possible que l'étanchéité ne soit pas assurée à chacune des opérations de réalisation d'une pièce cylindrique en composite. Pour cette raison, il est préférable de prendre des joints toriques gonflables en silicone.

Le joint torique le plus sollicité pendant la réalisation de la pièce est le joint intérieur, car d'un côté il subit la pression de l'autoclave, qui est de l'ordre de 8 bar, et de l'autre côté il subit le vide, qui est de l'ordre de 50 mbar. Dans ces conditions, on peut utiliser, par exemple, deux joints gonflables tubulaires ayant un diamètre extérieur de 16 mm. Les gorges destinées à recevoir ces joints sont usinées en opposition de manière à ne pas affaiblir la peau, comme cela est représenté dans les dessins annexés. Avantageusement, le joint intérieur doit pouvoir être gonflé à une pression de l'ordre de 10 bar.

L'utilisation de joints gonflables assure l'étanchéité nécessaire pour l'outillage de l'invention. Toutefois, cette utilisation n'est pas sans impacte sur le dimensionnement des peaux de chacun des éléments et de la structure porteuse. En effet, les joints gonflages induisent des efforts très importants sur les parois longitudinales des peaux. En effet, en considérant que la pression du joint s'applique sur environ 50 % de la gorge, l'effort généré sur le bord d'une peau de longueur 6000 mm est de l'ordre de 50000 N environ. Suivant la géométrie des peaux, ces efforts induisent des moments de torsion et de flexion dans la structure porteuse qui doivent avoir des dimensions en conséquence.

La validité de la tenue de l'étanchéité de la pression en autoclave est avantageusement vérifiée avant d'entrer la pièce dans l'autoclave, en gonflant l'espace inter-joint à la pression de 8 bar.

La gestion de l'interface entre les peaux de deux éléments adjacents et les joints gonflables et la bâche à vide, est aussi très importante pour assurer la tenue du vide lors de la polymérisation. A cet effet, une solution possible consiste à placer à chaque jonction de deux éléments adjacents, en extrémité de peau, un insert étanche permettant le passage du joint gonflable lequel est recouvert par la bâche à vide.

L'outillage de l'invention présente les avantages suivants :
- l'outil de l'invention constitue une solution économique permettant de disposer d'un outillage de grande dimension pour la fabrication de pièces de structure composite de très grande dimension avec une très grande précision géométrique ;
- l'outil de l'invention comporte une structure en fibres de carbone préimprégnées d'une résine époxy, ce qui permet une polymérisation à basse température, suivi d'une post-cuisson ;
- l'outil de l'invention comprend un revêtement en composite de fibres de carbone préimprégnées d'une résine époxy ou d'une résine à structure polyimide, notamment en bismaléimide, ce qui permet d'usiner la surface de l'outil sans le déformer et en conservant l'homogénéité et l'étanchéité du matériau ;
- l'outil peut être réparé suivant une procédure simple et applicable individuellement à chaque élément de l'outil ;
- la tenue du matériau de surface de l'outil permet une utilisation de celui-ci pendant plusieurs centaines de cycles ;
- l'architecture de l'outil de l'invention, grâce à laquelle la partie centrale de l'outil est entièrement dégagée, permet dé prévoir une mécanisation de la manipulation des éléments de l'outil afin de faciliter l'opération de démandrinage et de remontage du mandrin et de réduire ainsi la durée de ces opérations pour des fabrications en série.

D'autres caractéristiques et avantages de la présente invention ressortiront de la description ci-après d'un mode de réalisation de l'outil de l'invention. La description est faite en référence aux dessins dans lesquels
les figures 1 à 8 représentent un outil suivant un mode de réalisation préféré de l'invention et la cinématique de son démontage, à savoir
la figure 1 représente l'outil avec un premier élément dégagé pour être extrait,
la figure 2 représente l'extraction du premier élément de l'outil de l'invention,
la figure 3 représente l'outil avec un deuxième élément dégagé pour être extrait,
la figure 4 représente l'extraction du deuxième élément de l'outil de l'invention,
la figure 5 représente l'outil avec les trois derniers éléments dont l'antépénultième élément est dégagé pour être extrait,
la figure 6 représente l'extraction de l'antépénultième élément de l'outil de l'invention,
la figure 7 représente l'outil avec les deux derniers éléments dont l'avant-dernier est dégagé pour être extrait,
la figure 8 représente l'extraction de l'avant-dernier élément de l'outil de l'invention,
la figure 9 représente isolément un élément de l'outil de l'invention du côté de la peau de l'élément,
la figure 10 représente l'élément de la figure 9 en une section transversale,
la figure 11 représente la jonction entre deux éléments adjacents de l'outil de l'invention, et
la figure 12 représente schématiquement la disposition d'un insert d'étanchéité dans un outil de l'invention.

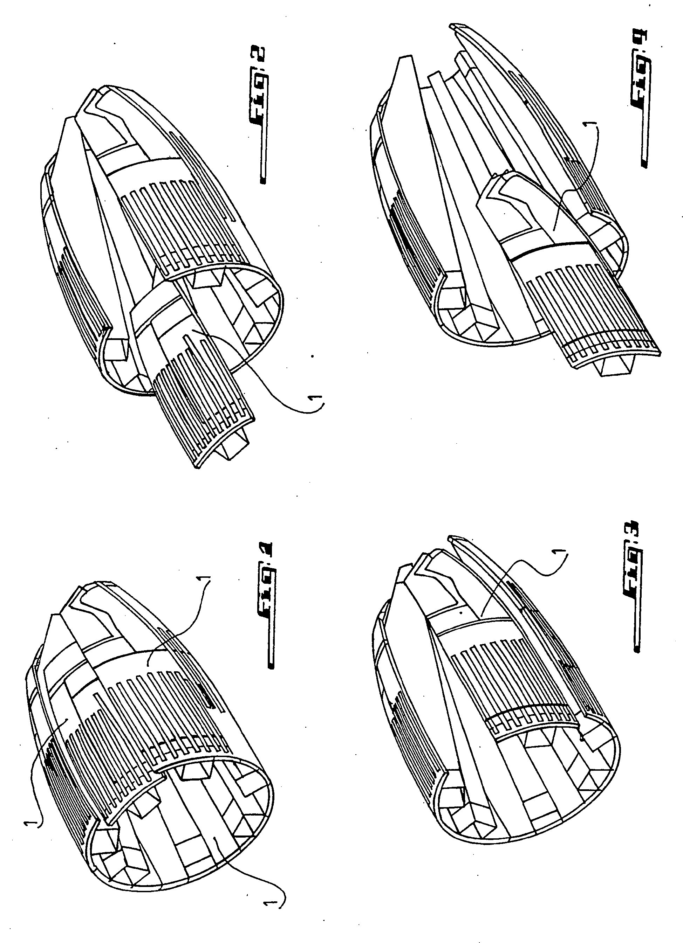

La figure 1 représente un outil en matériau composite pour la réalisation d'une pièce cylindrique en un matériau composite, par exemple pour la réalisation d'un élément de fuselage d'un avion. L'outil, qui est lui-même réalisé sous la forme d'un élément cylindrique de révolution, est destiné à constituer un mandrin sur lequel la pièce cylindrique à réaliser sera formée.

Conformément à l'invention, l'outil comprend sept éléments dont chacun constitue un secteur cylindrique de l'outil. Les éléments 1 sont conformés pour être maintenus en contact étanche suivant le pourtour de la pièce à réaliser.

Avantageusement, les éléments 1 de l'outil de l'invention sont tous identiques entre eux lorsqu'il s'agit de réaliser des pièces cylindriques de révolution ou ayant une forme proche de celle d'un cylindre de révolution.

Toutefois, la présente invention s'applique également à des outils en matériau composite permettant de réaliser des pièces tubulaires ayant une section non circulaire.

Pour cette raison, le nombre d'éléments et, le cas échéant, leurs formes seront déterminés individuellement pour chaque outil.

Comme le montre la suite des figures 1 à 8, les éléments 1 sont non seulement conformés pour pouvoir constituer un moule cylindrique, mais ils sont également conformés pour être dégagés les uns après les autres individuellement vers l'intérieur de l'outil et pour être retirés sans entraver la pièce réalisée.

La suite des figures 1 à 8 représente donc pour quatre éléments 1 choisis de l'outil de l'invention comment l'élément est dégagé vers l'intérieur de l'outil et est ensuite extrait de l'outil et donc de l'intérieur de la pièce réalisée.

Il est aisé de s'imaginer que pour la manipulation de chacun des éléments, et cela aussi bien pour le démontage du moule que pour sa reconstitution, des moyens hydrauliques ou autrement mécanisés peuvent être utilisés pour la manipulation de chacun des éléments. De plus, il faut prévoir des moyens mécanisés ou non, qui permettent de maintenir les éléments l'un après l'autre jusqu'à ce que l'outil soit complet.

La forme d'un outil complet de l'invention pouvant être aisément déduit de la figure 1, l'outil complet n'est pas représenté séparément dans le dessin. La figure 1 représente l'outil de l'invention avec un premier élément 1 dégagé de la périphérie de l'outil en vue d'être extrait de l'intérieur de la pièce réalisée (non représenté). La figure 2 représente le premier élément en train d'être extrait.

Les figures 3 et 4 représentent respectivement le deuxième élément 1 en position de dégagement et en train d'être extrait de l'intérieur de la pièce réalisée.

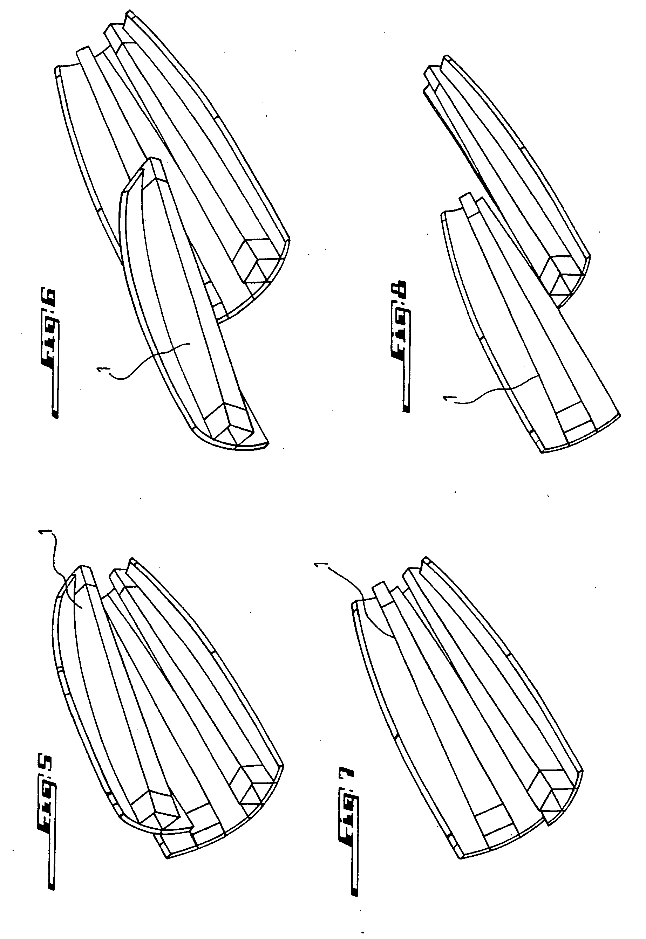

Les figures 5 et 6 représentent les trois derniers éléments restant de l'outil de l'invention avec le cinquième des sept éléments respectivement en position dégagée et en voie d'extraction.

Et les figures 7 et 8 représentent l'étape suivante où il ne reste que les deux derniers éléments de l'outil de l'invention. La figure 7 représente l'avant-dernier élément en position de dégagement et la figure 8 représente l'avant-dernier élément en voie d'extraction.

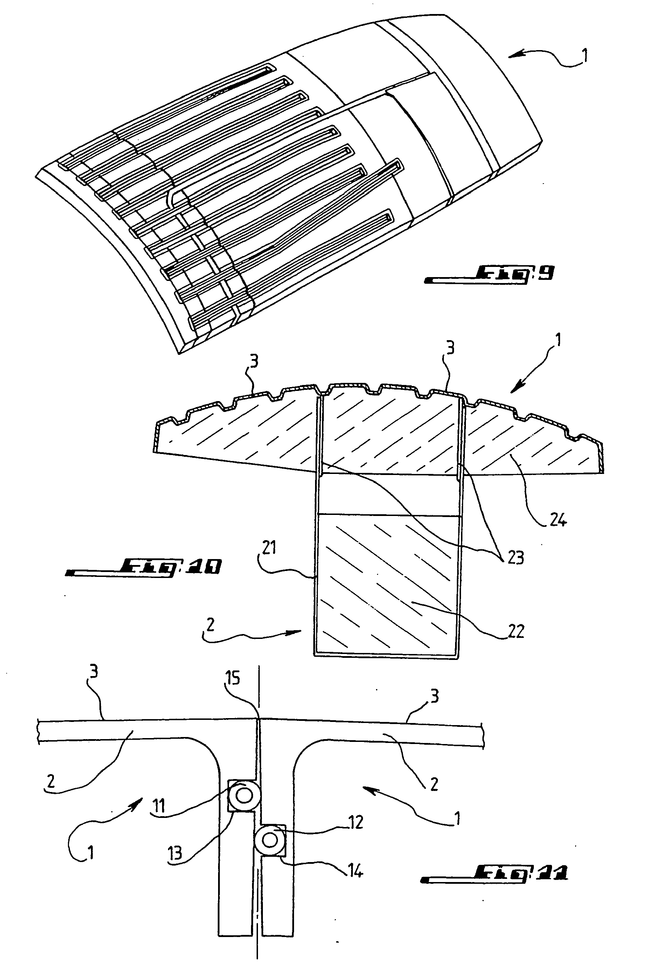

La figure 9 représente isolément un élément 1 en une vue en perspective sur sa face convexe, c'est-à-dire sur la face destinée à être tournée vers la pièce à réaliser. On voit sur cette figure plus particulièrement que la surface de l'élément 1 présente toutes les rainures ou parties en saillie nécessaires et disposées suivant la géométrie prévue pour permettre de réaliser sur la face intérieure de la pièce à réaliser les nervures ou enfoncements souhaités.

La figure 10 représente un élément 1 en une coupe transversale par rapport à l'axe symétrique de l'outil de l'invention. On y voit plus particulièrement que l'élément 1 comprend une structure porteuse 2 en composite de fibres, ainsi qu'une peau 3 moulée sur la structure porteuse 2. La structure porteuse 2 comporte, selon le mode de réalisation représenté dans les dessins, une peau 2 suivant la forme déduite de la forme finale de la pièce, une poutre 21 en forme de U avec une section rectangulaire, au moins une cloison transversale 22 dans la partie inférieure de la poutre 21, des voiles longitudinaux 23 sur les extrémités ouvertes de la poutre 21 ainsi qu'un voile transversal 24 s'étendant sur le largeur entière de l'élément 1 et sur une hauteur déterminée par la courbure de la peau 3.

La figure 11 représente la jonction entre deux éléments 1 adjacents. Dans les retours latéraux de la structure 2 et de la peau moulée 3, deux joints toriques gonflables 11, 12 sont placés dans des rainures 13, 14 situés en opposition et radialement décalées l'une de l'autre. Grâce à cette disposition de l'invention, chacun des deux joints 11, 12 prend appui sur la structure de l'élément adjacent. A titre d'exemple, on peut utiliser des joints gonflables d'un diamètre extérieur de l'ordre de 16 mm et les deux gorges 13, 14 sont réparties alternativement sur chaque tuile adjacente pour ne pas affaiblir la structure.

Un espace 15 entre les deux éléments 1 adjacents qui se présentent au niveau de la peau de chacun des éléments est avantageusement comblé avec une résine époxy. Toutefois, au vue des pressions agissant pendant la cuisson de la pièce réalisée, ce « bouchage » de l'espace 15 n'assurera aucune fonction d'étanchéité. La fonction d'étanchéité est donc entièrement réalisée par les deux joints toriques gonflables 11, 12. En effet, à titre d'exemple, lors du passage de la pièce à réaliser dans l'autoclave, la pression agissant du côté intérieur des éléments 1 est de l'ordre de 8 bar alors que du côté de la peau 3, le vide avec lequel une bâche est appliquée sur la pièce à réaliser, en tant que contre moule, est de l'ordre de 50 mbar seulement. En raison de ces circonstances de pression, le joint intérieur 12 est gonflé à 125 % de la différence de pression entre la pression de l'autoclave et le vide sur la bâche, c'est-à-dire à environ 10 bar.

Puisque les joints toriques gonflables 11, 12 assurent l'étanchéité des jonctions de deux éléments adjacents uniquement dans le sens de leur étendu longitudinale, l'étanchéité en extrémité de peau doit être assurée par des moyens supplémentaires. La solution proposée ici pour de tels moyens supplémentaires consiste à placer à chaque jonction de deux éléments adjacents, en extrémité de peau, un insert étanche.

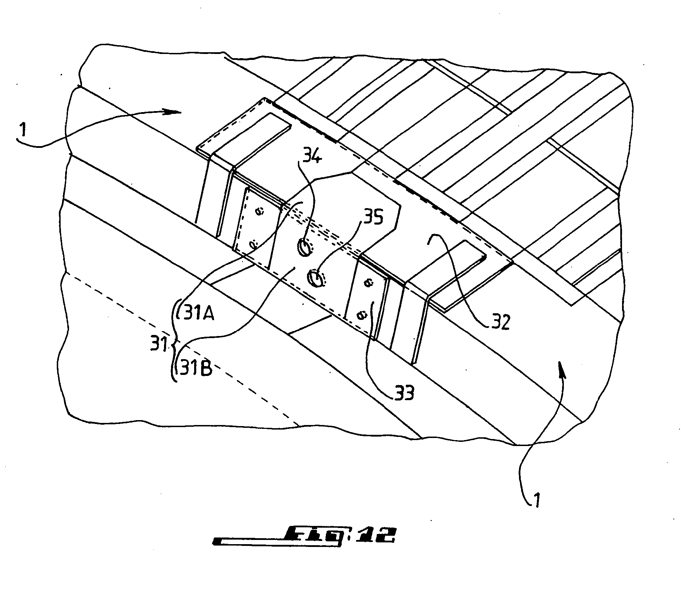

La figure 12 représente schématiquement la disposition d'un insert étanche 31 dans un outil de l'invention.

L'insert 31 est une pièce en équerre, par exemple en silicone, disposée avec une de ses deux ailes, référencée 31A, sur les peaux de deux éléments adjacents 1, 1 et avec l'autre aile, référencée 31B, transversalement par rapport aux peaux et en extrémité de celles-ci. L'aile 31A de l'insert 31 est recouverte par la bâche à vide et est maintenu en position par une plaque de maintien 32 de la bâche et l'aile 31B est maintenu par une plaque de maintien 33 de l'insert.

L'insert 31 comprend par ailleurs deux orifices 34, 35 disposés de façon à ce qu'il se trouvent en face des rainures 13, 14 des deux éléments adjacents 1, 1. Ces orifices permettent de sortir les joints toriques 11, 12 vers l'extérieur et de les brancher ensuite sur une source d'air à haute pression afin de pouvoir gonfler chacun des deux joints à la pression prédéterminée.

## Revendications

1. Outil en matériau composite pour la réalisation d'une pièce cylindrique en un matériau composite, l'outil étant destiné à constituer un mandrin sur lequel la pièce cylindrique sera formée, et comprenant un ensemble d'éléments (1) dont chacun constitue un secteur cylindrique de l'outil, chacun des éléments (1) comportant une structure porteuse (2) en composite de fibres, **caractérisé en ce que** chacun des éléments (1) comporte une peau (3) moulée sur la structure porteuse (2), l'outil comportant en outre des moyens d'étanchéité (11, 12) sous la forme de joints toriques (11, 12) gonflables en silicone destinés à être placés aux jonctions entre les éléments (1) de l'outil, à savoir dans des rainures (13, 14) situées en opposition et radialement décalées l'une de l'autre dans des retours latéraux de la structure porteuse (2) et de la peau (3).

2. Outil selon la revendication 1, **caractérisé en ce que** chacun des éléments (1) comporte une structure porteuse (2) en composite de fibres de carbone.

3. Outil selon la revendication 1 ou 2, **caractérisé en ce que** chacun des éléments (1) comporte une peau (3) en carbone préimprégnée d'une résine époxy.

4. Outil selon la revendication 1 ou 2, **caractérisé en ce que** chacun des éléments (1) comporte une peau (3) en carbone préimprégnées d'une résine à structure polyimide.

5. Outil selon la revendication 4, **caractérisé en ce que** chacun des éléments (1) comporte une peau (3) en carbone préimprégnée de bismaléimide.

6. Outil selon l'une quelconque des revendications 1 à 5, **caractérisé en ce que** chacun des éléments (1) comporte une peau (3) ayant subi, après moulage et cuisson, un usinage conférant à l'élément (1) des dimensions prédéterminées et à la peau (3) un état de surface prédéterminé.

7. Outil selon l'une quelconque des revendications 1 à 6, **caractérisé en ce qu'**il comprend des inserts étanches destinés à être placés aux jonctions des éléments (1) du côté de la peau (3).

8. Procédé de réalisation d'un outil en matériau composite pour la réalisation d'une pièce cylindrique en un matériau composite, l'outil comprenant un ensemble d'éléments (1) dont chacun constitue un secteur cylindrique de l'outil,
**caractérisé en ce qu'**il comprend au moins les étapes suivantes
réalisation d'un nombre prédéterminé d'éléments (1) comportant une structure porteuse (2) en composite de fibres,
moulage d'une peau (3) sur la structure porteuse (2) avec une surépaisseur afin de permettre un réusinage de la côte finie après fabrication,
cuisson des éléments (1),
usinage de la peau (3) de chacun des éléments (1) afin de conférer à chacun des éléments (1) des dimensions prédéterminées et à la peau (3) un état de surface prédéterminé,
pose de deux joints toriques gonflables en silicone à une distance de la peau de chacun des éléments et à des niveaux différents.

## Claims

1. A tool in a composite material for making a cylindrical part in a composite material, the tool being intended to form a mandrel on which the cylindrical part will be formed, and comprising a set of elements (1), each of which forms a cylindrical sector of the tool, each of the elements (1) including a bearing structure (2) in a fiber composite, **characterized in that** each of the elements (1) includes a skin (3), molded on the bearing structure (2), the tool further including sealing means (11, 12) in the form of inflatable silicone O-ring gaskets (11, 12) intended to be placed at the junctions between the elements (1) of the tool, i.e. in grooves (13, 14) located in opposition and radially shifted relatively to each other in side returns of the bearing structure (2) and of the skin (3).

2. The tool according to claim 1, **characterized in that** each of the elements (1) includes a bearing structure (2) in carbon fiber composite.

3. The tool according to claim 1 or 2, **characterized in that** each of the elements (1) includes a skin (3) in carbon pre-impregnated with an epoxy resin.

4. The tool according to claim 1 or 2, **characterized in that** each of the elements (1) includes a skin (3) in carbon pre-impregnated with a resin having a polyimide structure.

5. The tool according to claim 4, **characterized in that** each of the elements (1) includes a skin (3) in carbon pre-impregnated with bismaleimide.

6. The tool according to any of claims 1 to 5, **characterized in that** each of the elements (1) includes a skin (3) having undergone, after moulding and baking, machining giving the element (1) predetermined dimensions and the skin (3) a predetermined surface condition.

7. The tool according to any of claims 1 to 6, **characterized in that** it comprises sealed inserts intended to be placed at the junctions of the elements (1) on the side of the skin (3).

8. A method for making a tool in a composite material for making a cylindrical part in a composite material, the tool comprising a set of elements (1), each of which forming a cylindrical sector of the tool,
**characterized in that** it comprises at least the following steps
making a predetermined number of elements (1) including a bearing structure (2) in fiber composite, molding a skin (3) on the bearing structure (2) with an overthickness in order to allow re-machining of the finished dimensions after the making,
baking the elements (1),
machining the skin (3) of each of the elements (1) in order to give each of the elements (1) predetermined dimensions and the skin (3) a predetermined surface condition,
placing two inflatable silicone O-ring gaskets at a distance from the skin of each of the elements and at different levels.

## Patentansprüche

1. Werkzeug aus Verbundmaterial zur Herstellung eines zylindrischen Teils aus einem Verbundmaterial, wobei das Werkzeug dazu bestimmt ist, einen Kern zu bilden, auf dem das zylindrische Teil geformt wird, und eine Gruppe von Elementen (1) umfasst, von denen jedes einen zylindrischen Sektor des Werkzeugs darstellt, wobei jedes der Elemente (1) eine Trägerstruktur (2) aus Faserverbundstoff aufweist, **dadurch gekennzeichnet, dass** jedes der Elemente (1) eine auf der Trägerstruktur (2) geformte Haut (3) aufweist, wobei das Werkzeug außerdem Dichtungsmittel (11, 12) in Form aufblasbarer torischer Dichtungen (11, 12) aus Silikon aufweist, die dazu bestimmt sind, an den Verbindungen zwischen den Elementen (1) des Werkzeugs platziert zu sein, nämlich in Rillen (13, 14), die sich gegenüber und radial versetzt zueinander in seitlichen Rücksprüngen der Trägerstruktur (2) und der Haut (3) befinden.

2. Werkzeug nach Anspruch 1, **dadurch gekennzeichnet, dass** jedes der Elemente (1) eine Trägerstruktur (2) aus Karbonfaserverbundstoff aufweist.

3. Werkzeug nach Anspruch 1 oder 2, **dadurch gekennzeichnet, dass** jedes der Elemente (1) eine Haut (3) aus mit einem Expoxidharz vorimprägniertem Karbon aufweist.

4. Werkzeug nach Anspruch 1 oder 2, **dadurch gekennzeichnet, dass** jedes der Elemente (1) eine Haut (3) aus mit einem Harz mit Polyamidstruktur vorimprägniertem Karbon aufweist.

5. Werkzeug nach Anspruch 4, **dadurch gekennzeichnet, dass** jedes der Elemente (1) eine Haut (3) aus mit Bismaleimid vorimprägniertem Karbon aufweist.

6. Werkzeug nach einem der Ansprüche 1 bis 5, **dadurch gekennzeichnet, dass** jedes der Elemente (1) eine Haut (3) aufweist, die nach dem Formen und Härten einer Bearbeitung unterzogen wurde, die dem Element (1) vorbestimmte Abmessungen verleiht und der Haut (3) einen vorbestimmten Oberflächenzustand.

7. Werkzeug nach einem der Ansprüche 1 bis 6, **dadurch gekennzeichnet, dass** es dichte Einsätze umfasst, die dazu bestimmt sind, auf der Seite der Haut (3) an den Verbindungen der Elemente (1) platziert zu sein.

8. Verfahren zur Herstellung eines Werkzeugs aus Verbundmaterial für die Herstellung eines zylindrischen Teils aus einem Verbundmaterial, wobei das Werkzeug eine Gruppe von Elementen (1) aufweist, von denen jedes einen zylindrischen Sektor des Werkzeugs bildet,
**dadurch gekennzeichnet, dass** es mindestens die folgenden Schritte umfasst
Herstellen einer vorbestimmten Anzahl von Elementen (1), die eine Trägerstruktur (2) aus Faserverbundstoff aufweisen,
Formen einer Haut (3) auf der Trägerstruktur (2) mit einer Zugabe, um eine Nachbearbeitung der fertiggestellten Seite nach Herstellung zu erlauben,
Härten der Elemente (1),
Bearbeiten der Haut (3) jedes Elements (1), um jedem Element (1) vorbestimmte Abmessungen zu verleihen und der Haut (3) einen vorbestimmten Oberflächenzustand,
Anbringen zweier aufblasbarer torischer Dichtungen aus Silikon in einem Abstand von der Haut jeder der Elemente und auf unterschiedlichen Ebenen.
